# EUROPEAN PATENT APPLICATION

(11) **EP 2 204 588 A1**
(43) Date of publication of application: **07.07.2010**
(21) Application number: 08022541.0
(22) Date of filing: 31.12.2008
(51) Int. Cl.: F16B 12/40, F16B 7/04, A47G 25/06

(54) **Mounting device and garment rail using mounting device**

(71) Applicant: Deutsche Post AG, 53113 Bonn (DE)
(72) Inventor: The designation of the inventor has not yet been filed
(74) Representative: Jostarndt, Hans-Dieter

(57) **Abstract**

The invention relates to a mounting device (10) for fixing a first bar (20) perpendicularly to a second bar (30;31). The mounting device (10) is composed of three members (40;50;60), whereby two opposite members (40;50) are connected to each other and form the main body of the device (10), and these opposite members (40;50) each comprise a channel (41;51) with a semicircular cross-section embedded in a first surface (42;52) of the opposite members (40;50), whereby these channels (41 ;51) form a first circular passage (12), when both members (40;50) are connected via said first surface (42;52). The opposite members (40;50) each comprise another channel (43;53) with a quadrant cross-section at the edge connecting said first surface (42;52) to a second surface (44;54), whereby these channels (43;53) form a semicircular channel when both opposite members (40;50) are connected via said first surface (42;52). Furthermore, a closing member (60) is connected to said second surfaces (44;54) of the opposite members (40;50), whereby the closing member (60) comprises a channel (61) with semicircular cross-section embedded in a third surface (62) of the closing member (60), which forms a second circular passage (14), when the third surface (62) of the closing member (60) is connected to the second surfaces (44;54) of the two opposite members (40;50), respectively. Thereby, the longitudinal axis (11) of the first circular passage (12) lies perpendicularly to the longitudinal axis (13) of the second circular passage (14), and the first bar (20) can be inserted into the first circular passage (12) and the second bar (30;31) can be inserted into the second circular passage (14). Furthermore, the mounting device (10) comprises means for fixing the second bar (30:31) within the second passage (14).

The invention also relates to a garment rail (70) using two mounting devices (10;10') for removably mounting at least one horizontal rail (20) to two lateral vertical poles (30;31).

## Description

The invention relates to a mounting device for fixing a first bar perpendicularly to a second bar. The invention also relates to a garment rail using said mounting device for fixing a horizontal rail to two lateral vertical poles.

Usually, garment rails are used for storage and transport of garments on hangers. A garment rail comprises at least one horizontal rail that is connected to two lateral vertical poles. The connection between the horizontal rail and the vertical poles can be established in different ways, whereby permanent or non-permanent connections can be used. Preferably, the horizontal rail is mounted at the upper ends of the vertical poles in order to allow long garments to hang down. However, if shorter hanging garments are stored or transported, e.g. children's wear, shorts, blouses, they do not use the full space available due to their length. In order to increase the capacity of garment rails, more than one horizontal bar can be mounted on the vertical poles. Preferably, these additional rails should be removable so they can be mounted only if required.

Therefore, it is the object of the invention to provide a mounting device for fixing horizontal rails to vertical poles, whereby the connection should be removable.

According to the invention, this objective is achieved by a mounting device having the features of the independent Claim 1. Advantageous refinements of the device are set forth in the subordinate Claims 2 through 9. The invention also comprises a garment rail according to claims 10 and 11, which uses said mounting device.

A mounting device according to the invention is used for fixing a first bar perpendicularly to a second bar. The mounting device is composed of three members, whereby two opposite members are connected to each other and form the main body of the device. These opposite members each comprise a channel with a semicircular cross-section embedded in a first surface of the opposite members, whereby these channels form a first circular passage, when both members are connected via said first surface. Furthermore, the opposite members each comprise another channel with a quadrant cross-section at the edge connecting said first surface to a second surface, whereby these channels form a semicircular channel when both opposite members are connected via said first surface. A closing member is connected to said second surfaces of the opposite members, whereby the closing member comprises a channel with semicircular cross-section embedded in a third surface of the closing member, which forms a second circular passage, when the third surface of the closing member is connected to the second surfaces of the two opposite members, respectively. Thereby, the longitudinal axis of the first circular passage lies perpendicularly to the longitudinal axis of the second circular passage, whereby the first bar can be inserted into the first circular passage and the second bar can be inserted into the second circular passage.

Furthermore, the mounting device comprises means for fixing the second bar within the second passage. In one embodiment of the invention, the means for fixing the second bar within the second passage is an over centered lever mounted on the closing member, whereby operating said lever clamps the device to the second bar by reducing the inner diameter of the second circular passage.

The connection between the opposite members can be established in various ways. Preferably, two opposite members are connected to each other via their first surfaces by at least one salient connection element mounted on one member engaging with a counterpart notch in the opposite member.

Said salient connection element can be a pin, whereas the counterpart notch is a bore, for example. However, in one preferred embodiment of the invention, the salient connection element is a tongue, whereas the counterpart notch is a groove, and the tongue and the groove both run parallel to the longitudinal axis of the first circular passage. Thereby, the tongue and the groove can have a hooked cross-section, and the opposite members are connected to each other by sliding the tongue into the groove in the direction of the longitudinal axis of the first circular passage.

Preferably, the closing member is similarly connected to the connected opposite members. In one embodiment of the invention, the closing member is connected to the second surfaces of the two opposite members by at least one salient connection element mounted on the third surface of the closing member engaging with at least one counterpart notch in the second surfaces of the opposite members. Thereby, the salient connection element can be a tongue, whereas the counterpart notch is a groove, and the tongue and the groove both run parallel to the longitudinal axis of the second circular passage. Preferably, the lengths of the tongue and the groove are smaller than the respective length of the third surface of the closing member.

A garment rail according to the invention comprises at least two lateral vertical poles and one horizontal rail connected to the lateral vertical poles. The horizontal rail is connected to the lateral vertical poles by means of a mounting device according to the invention at each end of the horizontal rail, whereby the horizontal rail is inserted into the first circular passage of each mounting device and each vertical pole is inserted into the second circular passage of each mounting device, respectively.

Preferably, the garment rail comprises one horizontal rail that is permanently fixed to the two lateral vertical poles and at least one other horizontal rail which is connected to the lateral vertical poles by means of two mounting devices according to the invention.

Advantages, special features and practical refinements of the invention can be gleaned from the subordinate claims and from the presentation below of preferred embodiments making reference to the figures.

The figures show the following:
- Figure 1: three members of a three-part mounting device according to one embodiment of the invention;
- Figure 2: the connection between two opposite members of the mounting device;
- Figure 3: a third closing member connecting the two opposite members of the mounting device;
- Figure 4: the mounting device connecting two bars; and
- Figure 5: a garment rail using two mounting devices for fixing an additional horizontal rail.

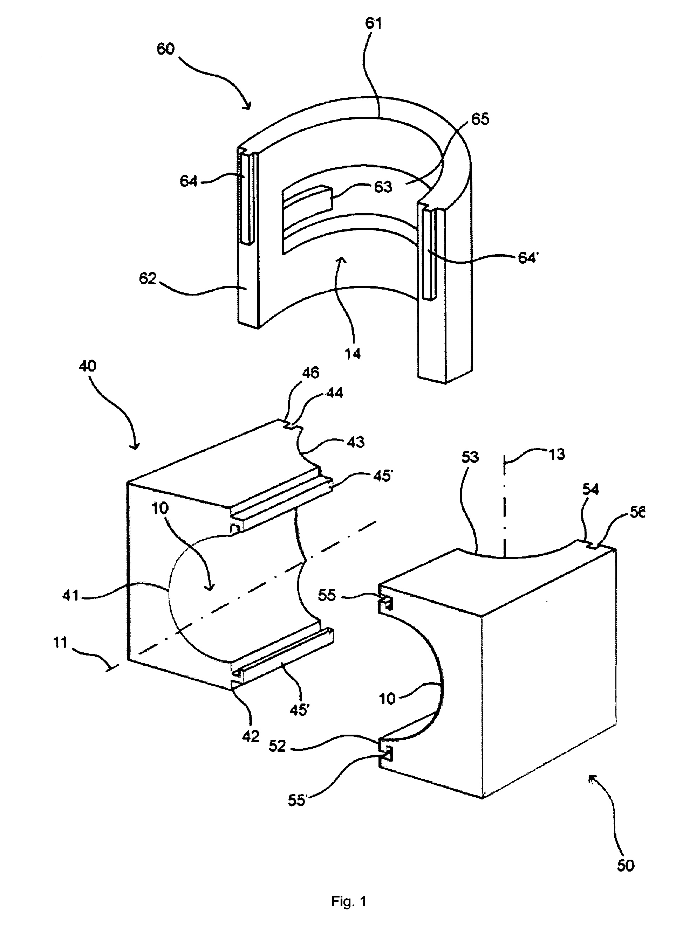

Fig. 1 shows a preferred embodiment of a three-part mounting device according to the invention, whereby the invention is not limited to the embodiment described in detail hereafter. In particular, the mounting device will be described for use with a garment rail, whereas the mounting device can be employed in many fields of application. According to the invention, the mounting device is composed of at least three members that are connected to each other in order to form a three-part mounting device. Preferably, the mounting device has kind of a rectangular (cubic) shape, but any rounded shape can also be chosen.

Two opposite members 40 and 50 form the main body of the mounting device 10. Both members 40 and 50 basically have a cubic shape with several modifications of their general shape. First of all, each of the two opposite members 40 and 50 comprises a channel 41 and 51, respectively, with a semicircular cross-section embedded in a first surface 42 and 52 of the opposite members. The channels 41 and 51 have a semicircular cross-section in order to form a circular passage 12, when both opposite members 40 and 50 are connected via said first surfaces 42 and 52. In the embodiment shown in Figure 1, a great part of the basic bodies of each of the opposite members has been cut out for forming each of the channels 41 and 51. A first bar 20 with a circular cross-section can easily be inserted into this passage 12.

Furthermore, the opposite members 40 and 50 each comprise another channel 43 and 53, respectively, with a quadrant cross-section at the edge connecting said first surface 42 and 52 to a second surface 44 and 54 of the opposite members 40 and 50, respectively. Thereby, said second surface 44 and 54 is adjacent to the first surface 42 and 52 forming an edge. The phrase "quadrant cross-section" means that a quarter of a circle is cut out of the bodies of the opposite members 40 and 50 at the edge between said surfaces 44 and 42 (54 and 52). The second channels 43 and 53 cut off the edge between theses adjacent surfaces, and the channels 43 and 53 have a cross-section in the form of a quadrant. Thereby, when both opposite members 40 and 50 are connected via their first surfaces 42 and 52, the channels 43 and 53 of both members form another semicircular channel (no reference number is given for this resulting channel). This resulting second channel perpendicularly crosses the circular passage 12 which is formed when the opposite members are connected to each other.

The two opposite members 40 and 50 can be connected in various ways. In one embodiment of the invention, several pins and counterpart bores are provided in the first surfaces 42 and 52 of the opposite members. These pins and counterpart bores engage when they are plugged into each other. However, in another preferred embodiment of the invention, the connection is established by at least one tongue and a counterpart groove into which said tongue is inserted. Preferably, two tongues 45 and 45' are mounted on the first surface 42 of the first member 40. Since most of its surface 42 is cut off by the channel 41, the tongues 45 and 45' are mounted on the remaining area of the surface 42. Thereby, they run in the direction of the longitudinal axis 11 of the resulting circular passage 12.

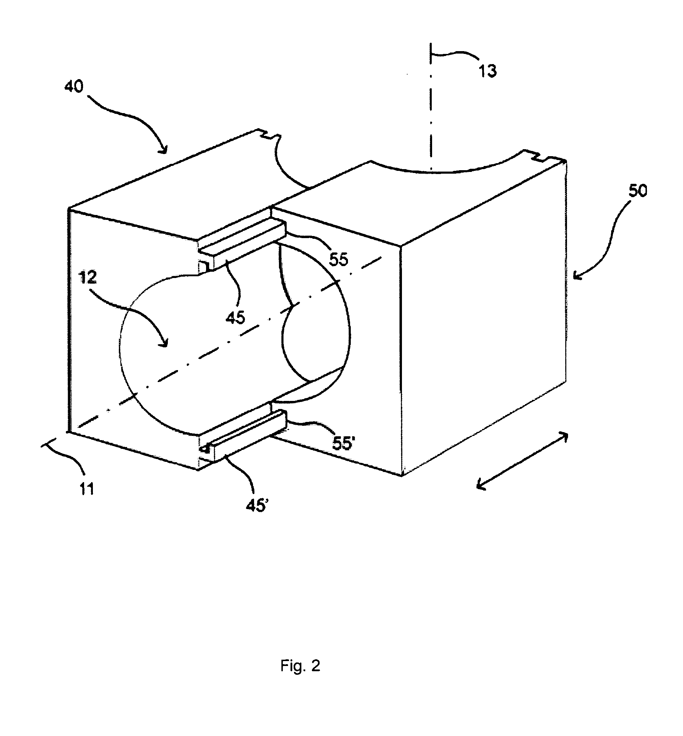

In the opposite member 50, counterpart grooves 55 and 55' are embedded in its first surface 52. Naturally, the cross section of the tongues 45 and 45' corresponds to the cross section of the grooves 55 and 55' on the opposite member 40. In one further preferred embodiment of the invention, the cross sections of the tongues 45 and 45' and the grooves 55 and 55' each have a hooked shape like shown in Figure 1. Thereby, the two opposite members 40 and 50 can be connected to each other by sliding the tongues 45 and 45' into the grooves 55 and 55' in the direction of the longitudinal axis 11 of the circular passage 12, like it is shown in Figure 2. Because of the hooked shape of the connecting elements, the connection can not fall apart. The connection can only be released by sliding both members back.

As mentioned before, when the two opposite members 40 and 50 are connected to each other, their semicircular channels 41 and 51 form the circular passage 12. The end of a first bar with circular cross-section can now be inserted into this passage12. Alternatively, the end of a bar can be placed in the semicircular channel 41 of the first member 40. Then, the second member 50 is slided onto the tongues of the first member 40 in the direction of the longitudinal axis of the bar which is also the longitudinal axis 11 of the first passage 12.

When both members 40 and 50 are connected with or without an inserted bar, they are fixed by means of a third closing member 60. This third member of the mounting device 10 is connected to the second surfaces 44 and 54 of the opposite members 40 and 50. The closing member 60 also comprises a channel 61 with semicircular cross-section embedded in a third surface 62 of the closing member 60. When the closing member 60 is connected to the two opposite members 40 and 50, a second circular passage 14 is formed, when the third surface 62 of the closing member 60 is connected to the second surfaces 44 and 54 of the two opposite members 40 and 50, respectively, because channel 61 of the closing member forms a circular passage 14 together with the channel resulting from connecting the quadrant channels of each opposite member. Thereby, the longitudinal axis 11 of the first circular passage 12 lies perpendicularly to the longitudinal axis 13 of the second circular passage 14.

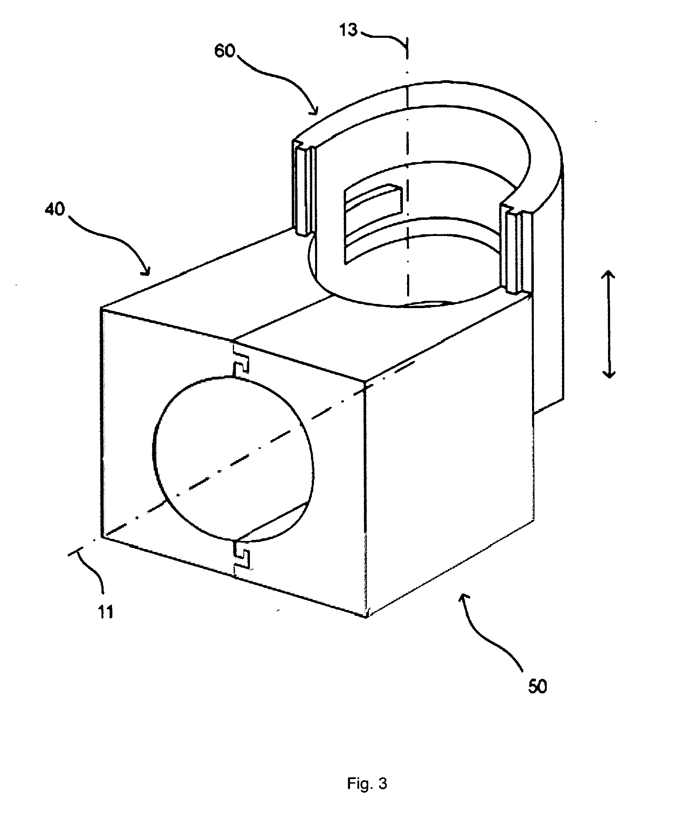

Preferably, the connection of the third closing member 60 to the two opposite members 40 and 50 is also established by a tongue and groove connection. For example, two tongues 64 and 64' can be formed in the surface 62 of the closing member, which engage with two grooves 46 and 56 on the side of the opposite members 40 and 50, or vice versa. The closing member 60 can be slided onto the opposite members 40 and 50 like it is shown in Figure 3. Thereby, the lengths of the tongues 64 and 64' and the grooves 46 and 56 are smaller than the respective length of the surface 62. When the mounting device 10 is looked at with the first circular passage 12 extending horizontally, the tongues and grooves of the closing member 60 are mounted in the upper area of the third surface 62 of the closing member 60. Thus, the closing member 60 can not slide down but is retained.

A second bar can be inserted into the resulting second circular passage 14 before or after the closing member 60 is fixed to the connected opposite members 40 and 50. Preferably, the mounting device 10 comprises means for fixing the mounting device to said second bar. In particular, if the second bar is a vertical lateral pole of a garment rail, the mounting device has to be fixed to the vertical pole in order to fasten the horizontal rail to the vertical pole. In one embodiment of the invention, the means for fixing the second bar within the second passage 14 is an over centered lever 63 attached to the closing member 60, whereby operating the lever 63 clamps the device 10 to the second bar 30 by reducing the inner diameter of the second circular passage 14. Thereby, the closing member 60 can comprise an open middle section 65 which provides for space for operating the over centered lever 63.

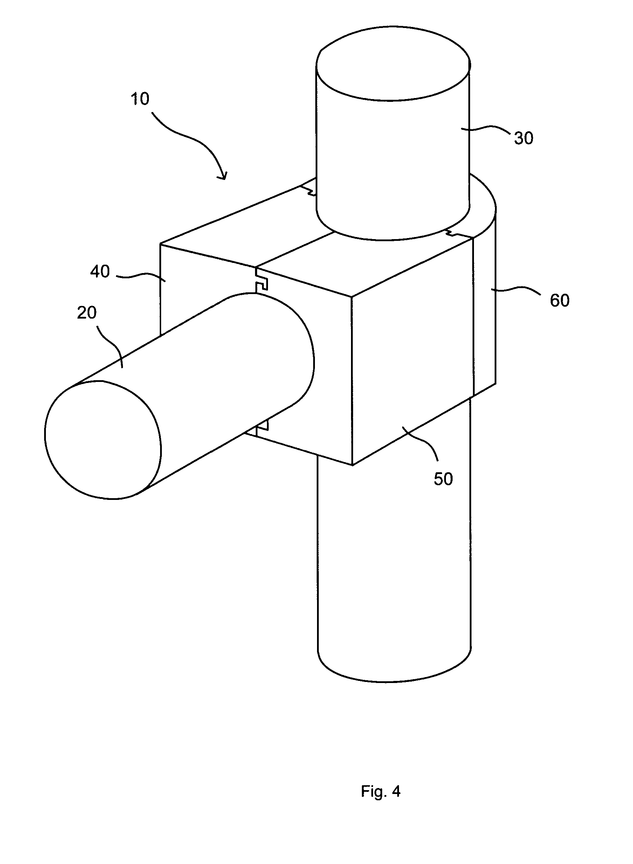

When two bars 20 and 30 are inserted into the circular passages 12 and 14 of the resulting three-part mounting device, a first bar 20 is perpendicularly connected to the second bar 30. This is shown in Figure 4, for example. Thereby, the connection of the first bar 20 to the second bar 30 can be removed by releasing the mounting device 10 from the second bar 30.

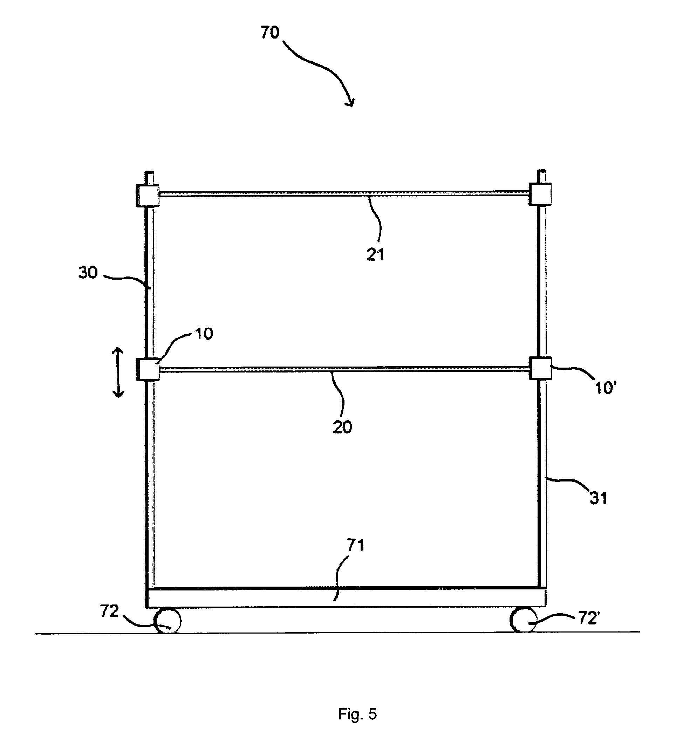

Preferably, the mounting device according to the invention is used for fixing at least one horizontal rail to two lateral vertical poles of a garment rail. Such garment rail 70 is schematically shown in Figure 5. The garment rail 70 comprises at least two vertical poles 30 and 31 and a horizontal rail 21, which is connected to the lateral poles 30 and 31 at their upper ends. Long garments like trousers, coats, etc. can be hung onto the horizontal rail by means of hangers. For stability reasons, the garment rail 70 can comprise another horizontal unit in form of a base unit 71 which is amounted at the lower ends of the vertical poles. Rolls 72 (72') can be attached to the base unit 71.

If smaller garments have to be transported/stored, at least one other second horizontal rail 20 is connected to the vertical poles by means of two mounting devices 10 and 10' according to the invention. Thereby, it is advantageous that the garment rail 70 does not have to be disassembled in order to fix the second horizontal rail. The second horizontal rail 20 can be positioned between the vertical poles 30 and 31. Then, the two opposite members of each mounting device are slided onto each other while the horizontal rail 20 is positioned in their semicircular channels. After that, the horizontal rail 20 is already fixed between the two vertical poles 30 31 and can be fixed to them in the chosen height by applying the closing members and operating the levers. Alternatively, the horizontal rail 20 can be inserted into the semicircular passages of each mounting device 10 and 10' and is then positioned and fixed between the two vertical poles 30 and 31.

Further horizontal rails can be mounted in the same way. Shorter garments can be hung onto at least two rails which increases the capacity of the garment rail significantly. The height of the additional horizontal rail(s) can always be adjusted by releasing the lever and moving the horizontal rail to the desired height.

### List of reference numerals

- 10,10': mounting device
- 11: longitudinal axis
- 12: first passage
- 13: longitudinal axis
- 14: second passage
- 20,21: bar, horizontal rail
- 30,31: bar, vertical pole
- 40: first opposite member
- 41: semicircular channel
- 42: first surface
- 43: quadrant channel
- 44: second surface
- 45,45': connecting element, pin, tongue
- 46: connecting element, groove
- 50: second opposite member
- 51: semicircular channel
- 52: first surface
- 53: quadrant channel
- 54: second surface
- 55,55': notch, groove
- 56: connecting element, groove
- 60: closing member
- 61: semicircular channel
- 62: third surface
- 63: lever
- 64,64': connecting element, tongue
- 65: open middle section
- 70: garment rail
- 71: base unit
- 72,72': roll

## Claims

1. Mounting device (10) for fixing a first bar (20) perpendicularly to a second bar (30;31),
**characterized in that,**
the mounting device (10) is composed of three members (40;50;60), whereby two opposite members (40;50) are connected to each other and form the main body of the device (10), and these opposite members (40;50) each comprise a channel (41;51) with a semicircular cross-section embedded in a first surface (42;52) of the opposite members (40;50), and these channels (41;51) form a first circular passage (12), when both members (40;50) are connected via said first surface (42;52), and whereby the opposite members (40;50) each comprise another channel (43;53) with a quadrant cross-section at the edge connecting said first surface (42;52) to a second surface (44;54), and these channels (43;53) form a semicircular channel when both opposite members (40;50) are connected via said first surface (42;52), and a closing member (60) is connected to said second surfaces (44;54) of the opposite members (40;50), whereby the closing member (60) comprises a channel (61) with semicircular cross-section embedded in a third surface (62) of the closing member (60), which forms a second circular passage (14), when the third surface (62) of the closing member (60) is connected to the second surfaces (44;54) of the two opposite members (40;50), respectively, and the longitudinal axis (11) of the first circular passage (12) lies perpendicularly to the longitudinal axis (13) of the second circular passage (14), whereby the first bar (20) can be inserted into the first circular passage (12) and the second bar (30;31) can be inserted into the second circular passage (14), and the device (10) comprises means for fixing the second bar (30;31) within the second passage (14).

2. Mounting device according to Claim 1,
**characterized in that,**
the means for fixing the second bar (30;31) within the second passage (14) is an over centered lever (63) mounted on the closing member (60), whereby operating said lever (63) clamps the device (10) to the second bar (30) by reducing the inner diameter of the second circular passage (14).

3. Mounting device according to one of Claims 1 and 2,
**characterized in that,**
the two opposite members (40;50) are connected to each other via their first surfaces (42;52) by at least one salient connection element (45;45') mounted on one member (40) engaging with a counterpart notch (55;55') in the opposite member (50).

4. Mounting device according to Claim 3,
**characterized in that,**
the salient connection element is a pin, whereas the counterpart notch is a bore.

5. Mounting device according to Claim 3,
**characterized in that,**
the salient connection element is a tongue (45;45'), whereas the counterpart notch is a groove (55;55'), and the tongue (45:45') and the groove (55;55') both run parallel to the longitudinal axis (11) of the first circular passage (12).

6. Mounting device according to Claim 5,
**characterized in that,**
the tongue (45;45') and the groove (55;55') have a hooked cross-section, and the opposite members (40;50) are connected to each other by sliding the tongue (45;45') into the groove (55;55') in the direction of the longitudinal axis (11) of the first circular passage (12).

7. Mounting device according to one of Claims 1 to 6,
**characterized in that,**
the closing member (60) is connected to the second surfaces (44;54) of the two opposite members (40;50) by at least one salient connection element (64;64') mounted on the third surface (62) of the closing member (60) engaging with at least one counterpart notch (46;56) in the second surfaces (44;54) of the opposite members (40;50).

8. Mounting device according to Claim 7,
**characterized in that,**
the salient connection element is a tongue (64;64), whereas the counterpart notch is a groove (46;56), and the tongue (64;64) and the groove (46;56) both run parallel to the longitudinal axis (13) of the second circular passage (14).

9. Mounting device according to Claim 8,
**characterized in that,**
the lengths of the tongue (64;64) and the groove (46;56) are smaller than the respective length of the third surface (62) of the closing member (60).

10. Garment rail (70) comprising at least two lateral vertical poles (30;31) and one horizontal rail (20) connected to the lateral vertical poles (30;31),
**characterized in that,**
the horizontal rail (20) is connected to the lateral vertical poles (30;31) by means of a mounting device (10) according to one of claims 1 to 9 at each end of the horizontal rail (20), whereby the horizontal rail (20) is inserted into the first circular passage (12) of each mounting device (10) and each vertical pole (30;31) is inserted into the second circular passage (14) of each mounting device (10), respectively.

11. Garment rail according to Claim 10,
**characterized in that,**
the garment rail (70) comprises one horizontal rail (21) that is permanently fixed to the two lateral vertical poles (30;31) and at least one other horizontal rail (20) which is connected to the lateral vertical poles (30;31) according to claim 10.
